# DEMANDE DE BREVET EUROPEEN

(11) **EP 0 783 992 A1**
(43) Date de publication de la demande: **16.07.1997**
(21) Numéro de dépôt: 97200031.9
(22) Date de dépôt: 07.01.1997
(51) Int. Cl.: B60R 11/02

(54) **Dispositif de berceau pour un terminal de radio portable**

(30) Priorité: 10.01.1996 FR 9600215
(71) Demandeur: PHILIPS ELECTRONICS N.V., 5621 BA Eindhoven (NL)
(72) Inventeur: Chivallier, Laurent, 75008 Paris (FR); Guerillot, Laurent, 75008 Paris (FR)
(74) Mandataire: Chaffraix, Jean

(57) **Abrégé**

Ce dispositif comporte :
- une partie réceptacle (32) dans laquelle vient se loger ledit terminal (1),
- une partie fixe (30),
- un système de fixation pour relier les deux parties, formé :
   . d'une rotule (50) fixée à l'une des parties,
   . d'une ouverture (52) pour permettre l'engagement de ladite rotule, ménagée dans l'autre partie,
   . d'un système de positionnement (55, 57) par rapport à ladite rotule.
   . d'un crochet de blocage (60) pour verrouiller la partie réceptacle avec la partie fixe.

Application : fixation de poste GSM dans une automobile.

## Description

L'invention concerne un dispositif de berceau destiné notamment à un terminal de radio portable comportant :
- une partie réceptacle dans laquelle vient se loger ledit terminal,
- une partie fixe,
- un système de fixation pour relier les deux parties et rendre amovible ladite partie réceptacle.

Ce dispositif trouve d'importantes utilisations notamment dans le domaine de l'automobile pour fixer un terminal de radiomobile relié à un réseau du genre GSM. Dans ces circonstances, on souhaite utiliser son terminal dans des conditions de confort maximum compte tenu de l'environnement plutôt bruyant.

Un tel dispositif est décrit dans le document de brevet européen n° 0 617 535. Certaines fonctions que l'on attend de ce genre de dispositif sont remplies par ce dispositif connu. Une première de ces fonctions consiste à alimenter le terminal de radio, une fois qu'il est disposé dans son réceptacle, de façon à économiser ses accumulateurs souvent coûteux. Une deuxième fonction, importante, est la fonction dite de mains-libres. Par contre, le dispositif connu n'assure pas une troisième fonction dite de communications privées. Ce genre de communications implique que le système de mains-libres soit désactivé, que l'on utilise le microphone et l'écouteur du terminal, que la première fonction soit assurée et qu'enfin la connexion avec l'antenne du véhicule soit maintenue.

Cette troisième fonction implique que la partie réceptacle comportant des moyens pour assurer la première fonction et le maintien de la connexion avec l'antenne soit séparée de la partie fixe pendant la communication privée et rattachée à la partie fixe à la fin de cette communication. Le système de fixation qui permet cette séparation et ce rattachement répétitif est soumis à quelques exigences. Du fait que le dispositif est le plus souvent disposé à l'intérieur d'une automobile, il convient que la séparation ne s'effectue pas de façon inopinée lors d'un choc un peu violent (7g par exemple). Une autre exigence qui découle de la première est que le rattachement puisse facilement s'effectuer de façon correcte.

La présente invention propose un dispositif du genre cité dans le préambule qui satisfait dans une large mesure aux exigences précitées.

Pour cela, un tel dispositif est remarquable en ce que le système de fixation est formé :
- d'une rotule fixée à l'une des parties,
- d'une ouverture pour permettre l'engagement de ladite rotule, ménagée dans l'autre partie,
- d'un méplat de positionnement par rapport à ladite rotule,
- d'un crochet de blocage pour verrouiller la partie réceptacle avec la partie fixe.

La description suivante, faite en regard des dessins ci-annexés, le tout donné à titre d'exemple non limitatif fera bien comprendre comment l'invention peut être réalisée.

La figure 1 montre un dispositif et un terminal de radio conformes à l'invention.

La figure 2 montre seulement le dispositif de l'invention sans le terminal.

La figure 3 montre une vue en coupe du système de fixation faisant partie du dispositif de l'invention.

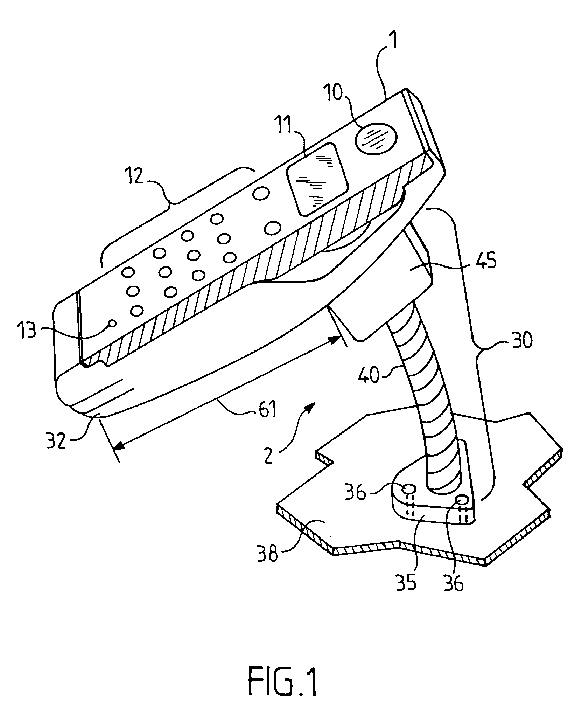

A la figure 1, la référence 1 indique un terminal de radio mobile convenant à un réseau GSM, par exemple. Ce terminal comporte de la manière usuelle : un écouteur 10, un écran 11, un clavier 12 et un microphone 13. Ce terminal 1 est disposé dans le dispositif de berceau 2 de l'invention. Ce dispositif comporte une partie fixe 30 et un réceptacle 32 dans lequel le terminal 1 est logé.

La partie fixe 30 est formée d'une base 35 qui se fixe au moyen de boulons 36 sur le plancher 38 du véhicule, d'une tige semi-flexible 40 qui permet à l'utilisateur d'adapter la position du dispositif de berceau à sa convenance et enfin, d'une assise 45 sur laquelle vient s'appuyer ledit réceptacle 32.

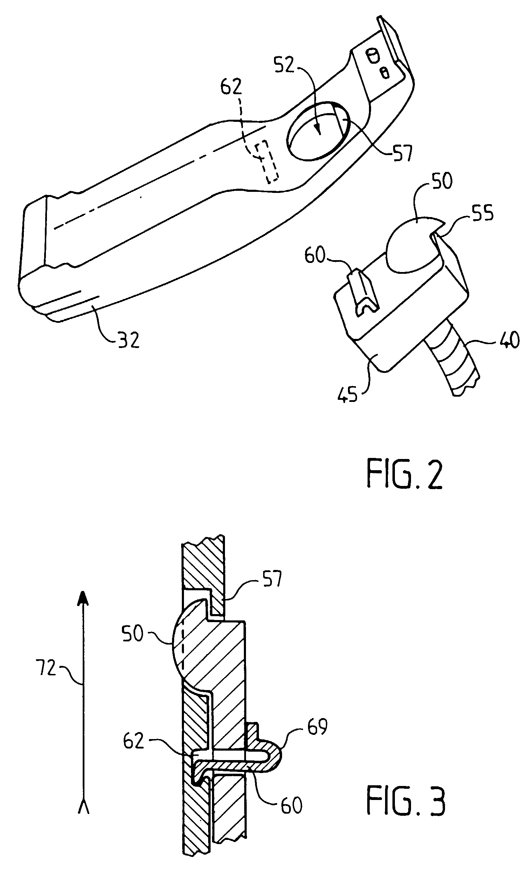

La figure 2 explicite le système de fixation du réceptacle 32 et de la partie fixe 30. Selon l'invention, il est constitué d'une rotule 50 qui est disposée sur l'assise 45 et d'une ouverture 52 ménagée dans le réceptacle 32. Un méplat 55 pratiqué dans la rotule permet de déterminer la position du réceptacle vis à vis de l'embase. Dans ce méplat 55, vient s'encastrer une arête 57 ménagée dans l'ouverture 52. Une fois le positionnement fait, un crochet 60 peut venir s'engager dans une fente 62 pratiquée sur la face non visible du réceptacle 32 et montrée en pointillé sur la figure 2.

Ainsi, ce système de fixation selon l'invention permet une première mise en place qui est aisée grâce à la rotule. Une rotation autour de celle-ci permet de déterminer une position telle qu'un rapprochement du réceptacle met tout de suite en contact le crochet avec sa fente. La mise en place du crochet verrouille finalement le réceptacle contre la partie fixe.

Une caractéristique importante de l'invention est que le système de fixation est disposé de telle manière qu'un espace 61 (figure 1) est laissé libre sur le corps du réceptacle pour que la main de l'utilisateur puisse aisément saisir ledit réceptacle.

La figure 3 montre une vue en coupe du système de fixation. Sur cette figure les éléments communs avec ceux des figures précédentes portent les mêmes références. Sur cette figure 3, on notera la forme en épingle à cheveu d'une partie formant ressort 69 du crochet 60. Ainsi cette partie 60 permet de verrouiller le réceptacle 32 contre la partie fixe 45 et permet par un mouvement indiqué par la flèche 72 de retirer de sa position le berceau.

## Revendications

1. Dispositif de berceau destiné notamment à un terminal de radio portable comportant :
- une partie réceptacle dans laquelle vient se loger ledit terminal,
- une partie fixe,
- un système de fixation pour relier les deux parties et rendre amovible ladite partie réceptacle,
caractérisé en ce que le système de fixation est formé :
- d'une rotule fixée à l'une des parties,
- d'une ouverture pour permettre l'engagement de ladite rotule, ménagée dans l'autre partie,
- d'un système de positionnement par rapport à ladite rotule,
- d'un crochet de blocage pour verrouiller la partie réceptacle avec la partie fixe.

2. Dispositif de berceau selon la revendication 1 caractérisé en ce qu'un espace est ménagé sur le berceau entre le corps de la partie réceptacle et le système de fixation, suffisant pour que la main de l'utilisateur puisse le saisir.

3. Dispositif de berceau selon la revendication 1 ou 2 caractérisé en ce que le crochet de blocage comporte une partie en forme d'épingle à cheveu pour former ressort.

4. Dispositif de berceau selon l'une des revendications 1 à 3 caractérisé en ce que le système de positionnement est formé d'un méplat pratiqué sur la rotule et d'une arête ménagée dans ladite ouverture.
